# EUROPEAN PATENT APPLICATION

(11) **EP 4 389 579 A1**
(43) Date of publication of application: **26.06.2024**
(21) Application number: 22306950.1
(22) Date of filing: 20.12.2022
(51) Int. Cl.: B63B 1/10, B63B 35/00, B63B 35/42, B63C 1/06

(54) **OFFSHORE FLOATING INTERVENTION VESSEL, INTENDED TO TEMPORARILY SUPPORT AN OFFSHORE WIND TURBINE PLATFORM, RELATED ASSEMBLY AND INTERVENTION METHOD**

(71) Applicant: Technip Energies France, 92741 Nanterre Cedex (FR)
(72) Inventor: MOOD, Fredrik, 92741 NANTERRE CEDEX (FR); WERENSKIOLD, Nils Erik, 92741 NANTERRE CEDEX (FR); ECKEY, Thomas, 92741 NANTERRE CEDEX (FR); BERTHELSEN, Reidar, 92741 NANTERRE CEDEX (FR); NILSEN, Øystein, 92741 NANTERRE CEDEX (FR)
(74) Representative: McWilliams, David John

(57) **Abstract**

The vessel comprises:
- a main hull (44) having an upper deck (62) defining un upper deck surface (64) at a first height (h1);
- a stern (48) protruding from the main hull (44), defining an upper receiving surface (72) extending in a plane at a second height (h2) lower than the first height (h1);
- a wind turbine equipment lifting tower (100), configured to lift at least an equipment of the wind turbine.

The volume (84) above the upper receiving surface (72) is free to receive an offshore wind turbine platform on the upper receiving surface (72), at the free end and over at least 50% of the length (SL) of the stern (48) taken along the longitudinal axis (A-A') from the free end.

The second height (h2) is at most equal to 40% of the first height (h1).

## Description

The present invention concerns an offshore floating intervention vessel, intended to temporarily support an offshore wind turbine platform in a body of water to carry out an installation and/or maintenance intervention on a wind turbine, the intervention vessel comprising:
- an elongated floating main hull defining a longitudinal axis, the main hull having an upper deck defining un upper deck surface at a first height, the main hull having a hull length,
- a stern longitudinally protruding from the main hull to a free end of the offshore floating intervention vessel, the stern defining an upper receiving surface to receive an offshore wind turbine platform, the upper receiving surface extending in a plane at a second height lower than the first height between the floating hull and the free end of the stern,
   the upper receiving surface being configured to engage a lower surface of an offshore wind turbine platform, the offshore floating intervention vessel having at least a ballast receiving volume, the offshore floating intervention vessel having a ballast controller configured to control a quantity of ballast received in the ballast receiving volume to lift the upper receiving surface of the stern in contact with the lower surface of the offshore wind turbine platform,
- a wind turbine equipment lifting tower, configured to lift at least an equipment of the wind turbine, the wind turbine equipment lifting tower protruding from the upper deck surface.

Such an intervention vessel is in particular adapted to carry out installation and/or maintenance operations in offshore wind parks located in waters deeper than 60 m.

The Earth's surface consists of roughly thirty per cent land and seventy per cent sea, with considerable potential for utilizing the sea area to produce renewable energy, be it from solar, wave or/and wind power.

However, eighty percent of offshore wind power potential is in waters deeper than 60 m, where conventional fixed bottom technology to support the wind towers is not economically feasible or practically possible.

To exploit this potential, floating offshore wind platforms anchored to the seabed with anchor lines have been developed. Such floating platforms can carry wind turbines having a nominal power ranging up to 15 MW and above.

With such large turbines, operating and maintenance conditions become more challenging, which require new maintenance and operating technologies.

Today, few or no solutions enable maintenance of wind energy-producing floating units at sea in a safe and economical way.

A number of floating to floating solutions and or solutions with mobile lifting devices are being developed which are in one way or another installed in connection with the offshore wind tower.

Common to these systems and methods is that they have not been able to challenge the base method, which is still to disconnect the offshore wind units and tow them ashore for major maintenance assignments.

Floating to floating solutions meet a significant challenge of reducing the relative movements between the floating units up at nacelle height. A few degrees of rotation down by the float quickly make up several meters up at nacelle height.

In order to dampen and or synchronize the relative movements that occur, several solutions use complicated lifting devices with motion-damping functions in interaction with sensor technology.

These may in some instances be expensive and challenging to operate and maintain in a marine environment. It is also not certain that it is possible to dampen the relative movements from, for example, one meter down to one millimeter fast enough.

Also known in the offshore field is a floating vessel which can be used to carry and displace other vessels such as disclosed in WO2014/133463.

Such a vessel submerges below a floating body and lifts the floating body out of water. This type of vessel is not configured to carry out floating offshore wind turbine maintenance, involving blade replacement and or replacement of other turbine parts, where the access to the wind turbine platform has to be done between the anchor lines of the platform, without disconnecting these anchor lines.

One aim of the invention is to provide an offshore intervention vessel, which is particularly adapted to wind farms located in deeper water, where installation and maintenance operations are harsh to conduct, with a simplified yet very stable docking on an offshore wind turbine platform.

To this aim, the subject matter of the invention is an offshore floating intervention vessel of the above-mentioned type, characterized in that the volume above the upper receiving surface is free to receive an offshore wind turbine platform on the upper receiving surface, at the free end and over at least 50% of the length of the stern taken along the longitudinal axis from the free end,
the second height being at most equal to 40% of the first height.

The offshore floating intervention vessel according to the invention may comprise one or more of the following feature(s), taken solely or according to any technical feasible combination:
- the length of a wind turbine platform receiving region of the upper receiving surface, taken along the longitudinal axis between an end of the upper deck adjacent to the stern and the free end is greater than 30% of the hull length and is advantageously comprised between 30% and 70% of the hull length, preferably between 40% and 60% of the hull length;
- the stern is a catamaran stern having at least two side hulls and preferably trusses connecting the two side hulls, the upper receiving surface being defined on the two side hulls;
- the stern comprises at least a receiving damping pad configured to partially protrude above the upper receiving surface to contact a lower surface of the offshore wind turbine platform, the or each damping pad being retractable in a housing provided in the stern from a protruding configuration to a retracted configuration;
- the or each damping pad is buoyant and is biased towards the protruding configuration, the stern comprising an actuator to control the configuration of the damping pad between the protruding configuration and the retracted configuration;
- the hull comprises a fore ship defining a free end of the main hull and a mid ship from which the stern protrudes, the mid ship having a tower supporting region adjacent to the stern, the wind turbine equipment lifting tower protruding from the tower supporting region;
- the tower supporting region protrudes above and apart from a storage region of the stern connected to the hull, the tower supporting region and the storage region defining a storage space, the tower supporting region being optionally cantilevered above the storage region;
- the wind turbine equipment lifting tower comprises a plurality of tower modules assembled end to end, at least one tower module being configured to be disassembled and stored in the storage space;
- the fore ship comprises a propulsion system configured to move the offshore floating intervention vessel in the body of water.

The invention also has as its subject matter an assembly comprising an offshore wind turbine platform and an offshore floating intervention vessel as defined above, supporting the offshore wind turbine platform, the upper receiving surface of the stern being engaged on a lower surface of the offshore wind turbine platform, and, preferentially, the upper receiving surface of the stern is totally immersed in the body of water, the offshore wind turbine platform being partially immersed in the body of water.

The assembly according to the invention may comprise one or more of the following feature(s), taken solely or according to any technical feasible combination:
- in projection along the longitudinal axis, a longitudinal dimension of the offshore wind turbine platform is contained in a longitudinal dimension of the upper receiving surface;
- the floating offshore wind turbine platform comprises a floating foundation having at least three floating columns, and lower pontoons connecting the at least three floating columns, the lower pontoons defining at least part of the lower surface of the floating offshore wind turbine platform, the upper receiving surface of the stern being engaged under each of the three pontoons.

Another subject matter of the invention is an intervention method on an offshore wind turbine platform comprising the following steps:
(i) transporting an offshore floating intervention vessel as defined above in the vicinity of an offshore wind turbine platform floating in a body of water;
(ii) placing the upper receiving surface of the stern below a lower surface of the offshore wind turbine platform;
(iii) removing ballast from the ballast receiving volume of the offshore floating intervention vessel to lift the upper receiving surface of the stern in contact with the lower surface of the offshore wind turbine platform to immobilize the offshore wind turbine platform on the upper receiving surface of the stern;
(iv) carrying out an intervention on a wind turbine of the offshore wind turbine platform;
(v) ballasting the stern by introducing ballast in the ballast receiving volume to disengage the upper surface from the lower surface;
(vi) transporting the offshore floating intervention vessel away from the offshore wind turbine platform,
wherein, during steps to, the upper receiving surface of the stern is totally immersed in the body of water, the offshore wind turbine platform remaining partially immersed in the body of water.

The intervention method according to the invention may comprise one or more of the following feature(s), taken solely or according to any technical feasible combination:
- carrying out the intervention comprises removing a wind turbine equipment, in particular a blade from the wind turbine using the wind turbine equipment lifting tower or/and mounting a wind turbine equipment on the wind turbine using the wind turbine equipment lifting tower;
- the wind turbine equipment lifting tower comprises a plurality of tower modules configured to be assembled end to end, at least one tower module being configured to be disassembled and stored in the storage space, the method comprising during step (i), maintaining the at least one tower module disassembled, and between step (iii) and step (iv), assembling the at least one disassembled tower module to another tower module to increase the height of the wind turbine equipment lifting tower.

The invention will be better understood, based on reading the following description, given solely as an example, and made in reference to the following drawings in which:
- Figure 1 is a schematic perspective view of a floating offshore wind turbine platform floating on a body of water;
- Figure 2 is a side view of the offshore floating intervention vessel according to the invention;
- Figure 3 is a top view of the intervention vessel according to the invention;
- Figure 4 is a perspective view of the stern of the intervention vessel according to the invention;
- Figure 5 is a side view of the intervention vessel of figure 2, during a first step of approaching the floating offshore wind turbine platform of figure 1;
- Figure 6 is a view similar to figure 5, in which the stern of the intervention vessel is introduced below a lower surface of an offshore wind turbine platform;
- Figure 7 is a view similar to figure 6, during a step of de-ballasting the stern of the intervention vessel;
- Figure 8 is a perspective view of the intervention vessel and of the floating offshore wind turbine platform in which the floating offshore wind turbine platform rests on the stern of the intervention vessel during an intervention;
- Figure 9 is an upper schematic view of figure 8.

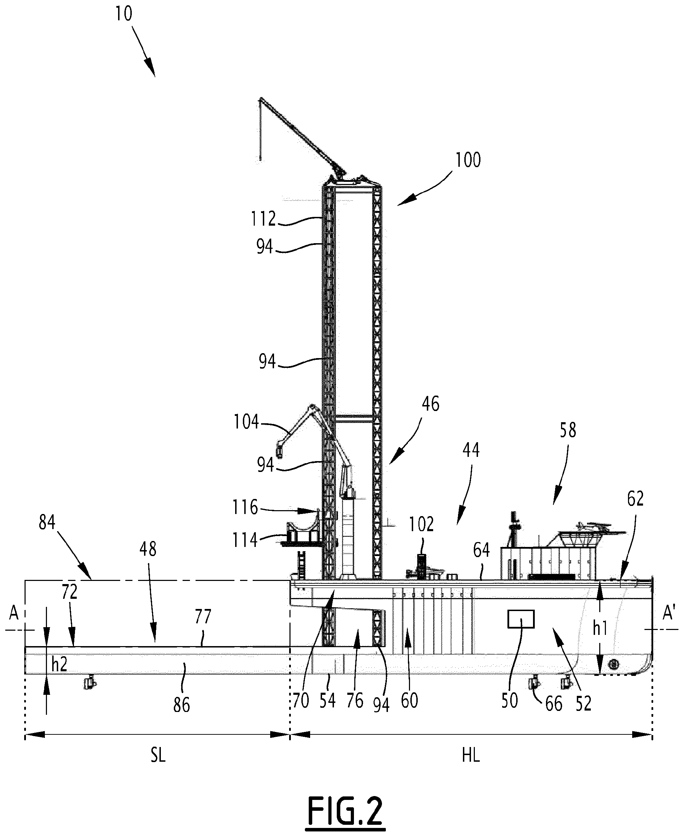

A first offshore floating intervention vessel 10 according to the invention is shown in particular in figures 2 to 5.

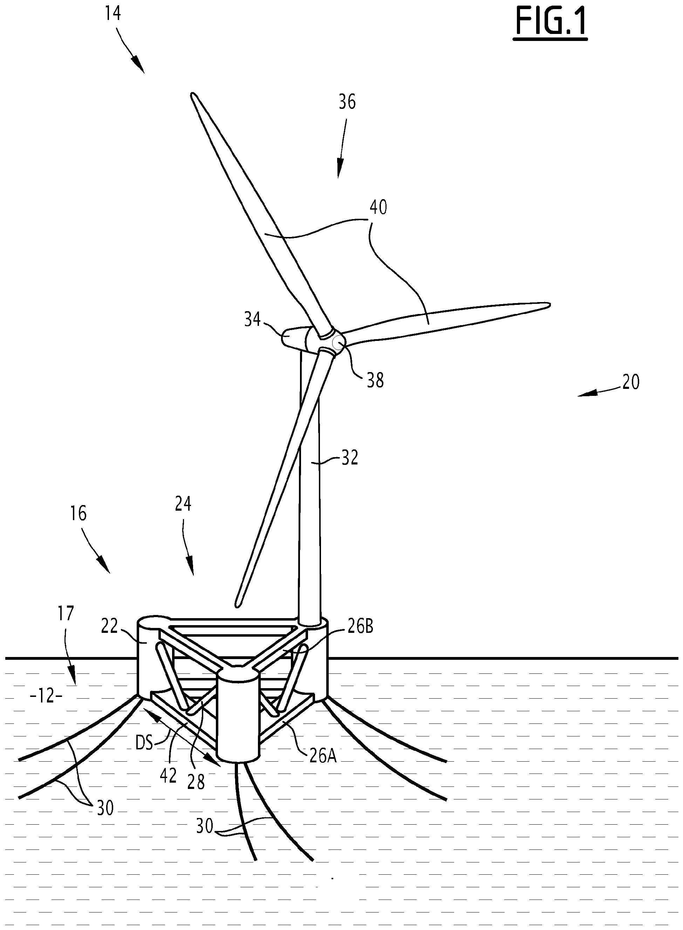

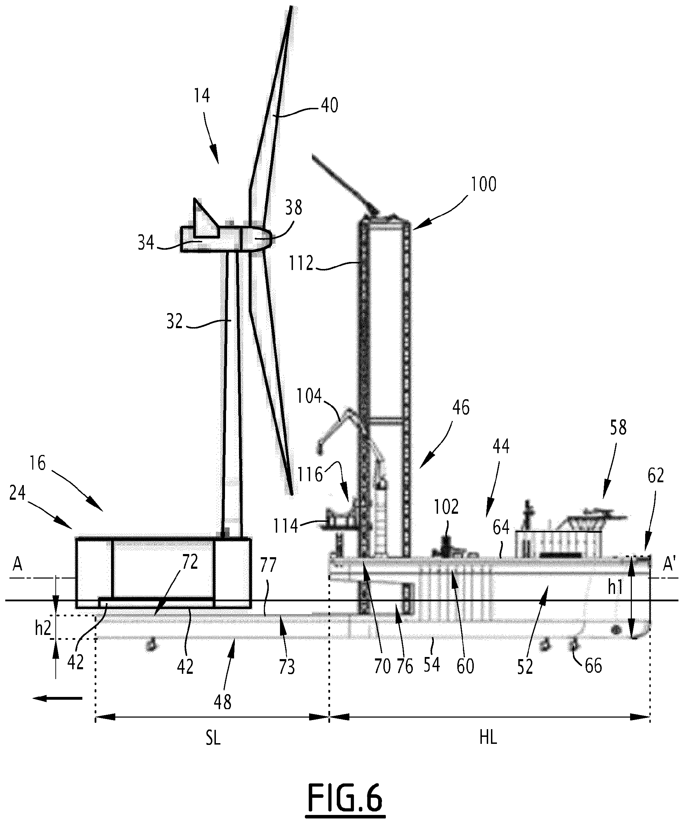

The intervention vessel 10 floats on a body of water 12. The intervention vessel 10 according to the invention is intended to carry out an installation and/or maintenance intervention on at least one floating offshore wind turbine platform 14 shown in figure 1 and in figures 6 to 8.

The wind turbine platform 14 is for example located in an offshore wind farm at the surface of the body of water 12.

The body of water 12 in the vicinity of the offshore wind turbine platform 14 has a depth greater than 50 meters, and generally comprised between 60 m and 3000 m.

The body of water 12 is for example an ocean, a sea, a lake, and/or a river.

In reference to figure 1, the wind turbine platform 14 has a floating foundation 16, an anchoring assembly 17 anchoring the floating foundation 16 to the bottom 18 of the body of water 12 and a wind turbine 20 carried by the floating foundation 16.

In the present example, the floating foundation 16 is a semi-submersible platform. It comprises at least three floating columns 22, frame elements 24 connecting the floating columns 22, and potentially, a deck (not shown). In variant, the floating foundation is a floating barge, with or without a central through cavity.

The frame elements 24 here comprise lower pontoons 26A, connecting each pair of adjacent floating columns 22 at the bottom of the columns 22, upper pontoons 26B connecting each pair of adjacent floating columns 22 at the top of the floating columns 22, and potentially, truss members 28, connecting a side of each column 22 to the center of a lower pontoon 26A.

The floating columns 22 extend vertically. The floating columns 22 have a buoyancy volume providing floating buoyancy to the floating foundation 16. The buoyancy is adapted such that the floating foundation 16 is partially immersed in the body of water 12.

The anchoring assembly 17 comprises a plurality of anchoring lines 30 connecting each column 22 to the bottom 18 of the body of water 12. In the example of figure 1, each floating column 22 is connected to at least an anchoring line 30, preferentially, between two and four anchoring lines 30.

The wind turbine platform 14 is therefore immobilized in horizontal position in the body of water 12.

The wind turbine 20 classically comprises a mast 32, a nacelle 34 mounted rotatable at the top of the mast 32, and a rotor 36, mounted rotatable with regards to the nacelle 34 preferentially about a horizontal axis.

The rotor 36 comprises a central hub 38 and blades 40 protruding radially from the central hub 38, the blades 40 being reversibly fixed on the hub 38.

The mast 32 is here fixed on top of a floating column 22, coaxially with the floating column 22 axis.

The floating columns 22 and advantageously the lower pontoons 26A define a lower surface 42 of the wind turbine platform 14, below which the intervention platform 10 is able to dock.

In reference to figures 2 to 5, the floating offshore intervention vessel 10 is configured to be moved at the surface of the body of water 12 to come in the vicinity of the wind turbine platform 14. It is configured to engage under the wind turbine platform 14 to support the wind turbine platform 14 and suppress relative movement between the floating offshore intervention vessel 10 and the wind turbine platform 14 during an intervention.

The intervention is for example an installation of a wind turbine equipment and/or a maintenance of the wind turbine equipment. In particular, the wind turbine equipment is a blade 40, and the intervention is the installation of a blade 40, a maintenance on a blade 40, or a replacement of a blade 40.

Other interventions concerning the nacelle 34 or the mast 32 are also within the scope of interventions which can be carried out using the intervention vessel 10. Wind turbine equipment involved in such an intervention include for example generators, drive shafts, bearings, pitch and rotor motors.

In reference to figure 2, the intervention vessel 10 comprises an elongate floating main hull 44, a wind turbine intervention system 46 carried by the main hull 44 and a stern 48 longitudinally protruding from the main hull 40 to receive the wind turbine platform 14 during an intervention.

The offshore floating intervention vessel 10 further comprises a ballasting controller 50 configured to control a quantity of ballast received in a ballast receiving volume 52 of the intervention vessel 10.

The elongate floating main hull 44 and the stern 48 define a flat bottom 54 of the intervention vessel 10, the flat bottom 54 being permanently submerged in the body of water 12.

The elongate floating main hull 44 extends along a longitudinal axis A-A' of the intervention vessel 10.

The main hull 44 comprises a fore ship 58 defining a prow end and a mid ship 60, supporting the wind turbine intervention system 46, the stern 48 protruding from the mid ship 60 opposite the fore ship 58.

The main hull 44 comprises an upper deck 62 extending along the fore ship 58 and the mid ship 60.

The main hull 44 has a hull length HL along axis A-A' from the end edges of the upper deck 62, i.e. from the prow end of the fore ship 58 to the end of the mid ship 60.

The upper deck 62 defines an upper deck surface 64. The upper deck surface 64 is at a height h1 from the bottom 54 of the intervention vessel 10.

The fore ship 58 comprises a propulsion system 66 configured to move the offshore floating intervention vessel 10 in the body of water 12. The propulsion system for example include angularly adjustable propellers.

The mid ship 60 comprises a tower supporting region 70, from which the tower of the wind turbine intervention system 46 protrudes.

In the example of figure 2, the tower supporting region 70 is located at a cantilevered end region of the upper deck 62 which is located above and apart from a connection region of the stern 48 connecting the stern 48 to the hull 44

The main hull 44 preferentially bears a control room/wheelhouse (not shown) with radar, radio communication, navigation controllers including dynamic positioning to control in particular the propulsion system 66. The control room also includes at least a control unit to monitor and remote control functional systems of the intervention platform 10 such as the ballast controller 50 and/or the wind turbine intervention system 46.

The main hull 44 advantageously comprise accommodation, an heliport, and/or a boat landing platform

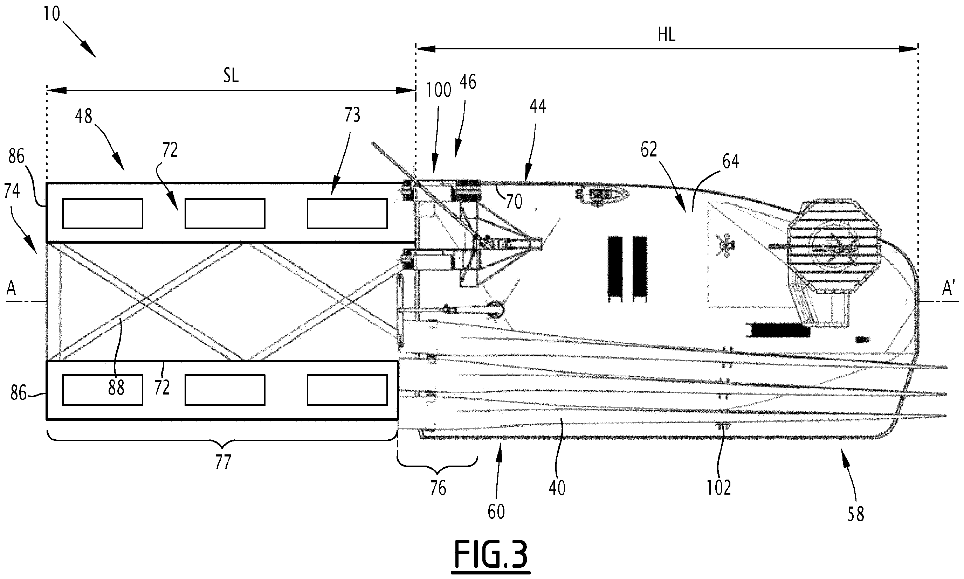

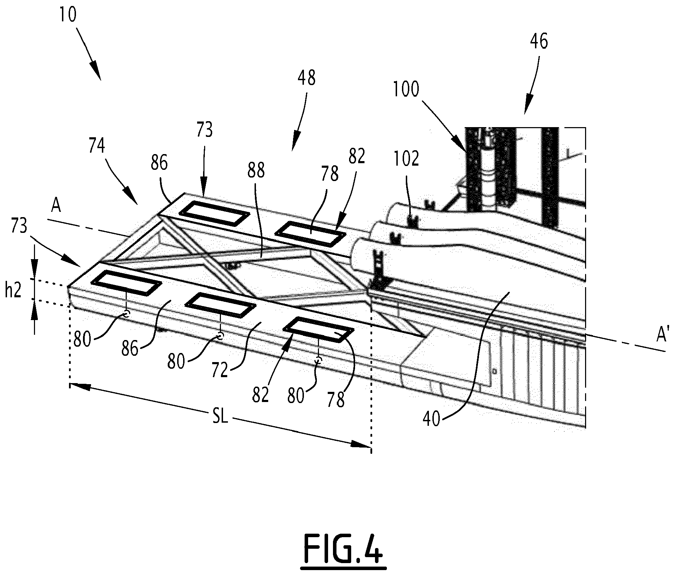

The stern 48 defines an upper receiving surface 72 at a height h2 lower than the height h1 of the upper deck 62, to receive and support the lower surface 42 of the floating wind turbine platform 14. The stern 48 advantageously comprise a dampening system 73 (see e.g. figures 3 and 4) to dampen the reception of the lower surface 42 of the wind turbine platform 14 during its docking on the upper surface 72.

In the example of figure 2 to 4, the stern 48 has a shape of a catamaran 74. It comprises two side hulls 86 extending parallel to the longitudinal axis A-A', apart from each other and trusses 88 connecting the two side hulls 86 in the intermediate space between the side hulls 86.

Each side hull 86 is connected to the main hull 44 at a respective side of the main hull 44. The side hulls 86 and the trusses 88 define the upper receiving surface 72.

The upper receiving surface 72 has a storage region 76, located below the cantilevered region of the upper deck 62, which is suitable for storing part of the wind turbine intervention system 46 and an open wind turbine platform receiving region 77 extending from the storage region 76 to the free edge of the stern 48.

The wind turbine platform receiving region 77 of the upper receiving surface 72 has a length SL, taken along axis A-A', greater than 30% of the hull length HL and generally comprised between 30% and 70% of the hull length HL, preferably between 40% and 60% of the hull length HL.

The height h2 of the upper receiving surface 72, taken vertically from the bottom 54 of the intervention vessel 10 is less or equal to 40% of the height h1 of the main hull 44 taken vertically between the bottom 54 of the intervention vessel 10 and the upper deck surface 64. The height h2 is generally comprised between 20 % and 30 % of height h1.

In comparison with the main hull 44, the stern 48 thus has a light structure which can easily be inserted below the lower surface 42 of the wind turbine platform 14, between the mooring lines 30, while offering a large upper reception surface 72 to safely dock the wind turbine platform 14.

In the wind turbine platform receiving region 77, the space above the upper surface 72 at heights between the height h2 of the upper receiving surface 72 and the height h1 of the main hull 44 defines a free volume 84 to dock a wind turbine platform 14.

In the absence of wind turbine platform 14 received on the upper receiving surface 72, the volume 84 is totally free along the axis A-A' between the free edge of the upper deck 62 and the free edge of the stern 48. It is also totally free transversely from one side edge of the stern 48, on one of the side hulls 86, to another side edge of the stern 48 to the other of the side hulls 86.

No element is protruding from the upper receiving surface 72 in the free volume 84.

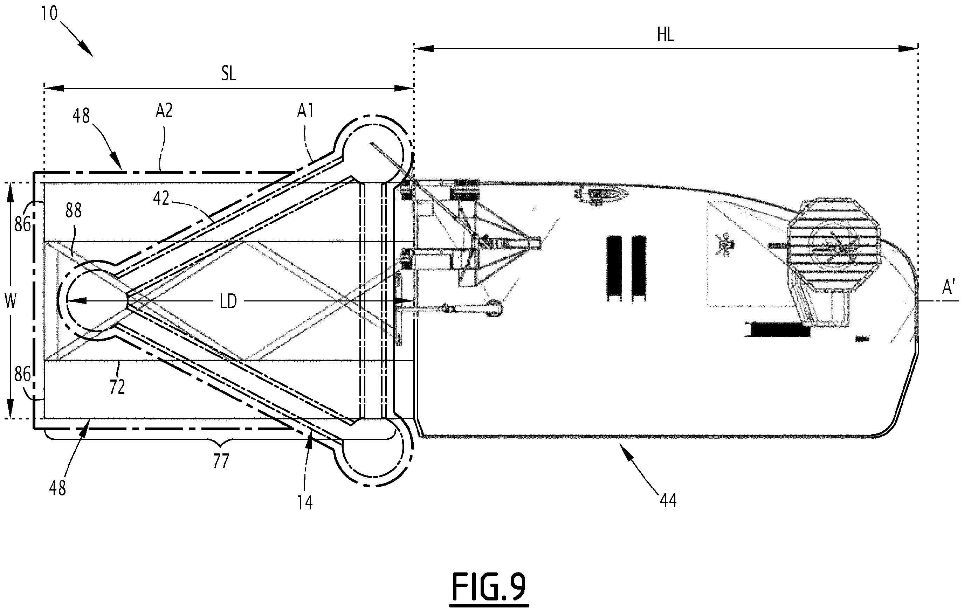

The upper receiving surface 72 is thus large enough to receive and lift a significant portion of the lower surface 42 of the wind turbine platform 14. Preferably, as shown in figure 9, more than 50 % of the area A1 delimited by the outer contour of the projection of the lower surface 42 of the wind turbine platform 14 on a horizontal plane is contained within the area A2 delimited by the projection of the outer contour of the wind turbine platform receiving region 77 of the upper receiving surface 72 in the same horizontal plane.

The volume above the upper receiving surface 72 is free to receive an offshore wind turbine platform 14 on the upper receiving surface 72, at the free end of the stern and over at least 50% of the length of the stern, preferably over 70% of the length of the stern taken along the longitudinal axis A-A' from the free end,

Preferably, the longitudinal dimension LD of the wind turbine platform 14 taken along the axis A-A' is smaller than the length SL of the wind turbine platform receiving region 77 of the upper receiving surface 72.

Moreover, in reference to figure 9, the maximum width W of the wind turbine platform receiving region 77 of the upper receiving surface 72, taken perpendicular to the longitudinal axis A-A' is smaller than the minimal distance DS separating the connection points of the mooring lines 30 on two adjacent columns 22, as shown in figure 1.

Thus, the wind turbine platform receiving region 77 of the upper receiving surface 72 can freely be placed below the lower surface 42 of the wind turbine platform 14, between two adjacent columns 22, without interfering with the mooring lines 30

Advantageously, in the example of a wind turbine platform 14 comprising columns 22 and lower pontoons 26A connecting the columns 22, the upper receiving surface 72 is engaged under each of the lower pontoons 26A of the wind turbine platform 14.

Thus, the wind turbine platform 14 can be received in a very stable manner on the stern 48 when the intervention vessel 10 docks under the lower surface 42. The wind turbine platform 14 is then configured to move jointly with the intervention vessel 10, with very limited relative movements or bending forces.

Advantageously, the upper receiving surface 72 comprises wood or other material that prevents damage of the lower surface 42 of the wind turbine platform 14 when it lays on the upper receiving surface 72.

As shown for example in figure 4, the dampening system 73 comprises at least a damping pad 78, each damping pad 78 being deployable from a housing 82 emerging in the upper receiving surface 72. It also comprises an actuator 80 configured to control the movement of each damping pad 78 from a retracted configuration in the housing 82 to a protruding configuration at least partially deployed out of the housing 82.

As shown in figure 4, each side hull 86 receives at least a damping pad 78, preferably several damping pads 78. The damping pads 78 are spaced one from another.

The damping pads 78 are preferably buoyant elements. They are for example made of foam and/or elastomeric buoys.

In this configuration, each damping pad 78 is thus biased by its own buoyancy towards the protruding configuration. The actuator 80 is configured to retract the damping pad 78 in the housing 82 and to maintain it in the retracted configuration. The actuator 80 for example comprises a winch and cable system connected to the damping pad 78.

In the retracted configuration, each damping pad 78 is advantageously flush with the upper receiving surface 72 or below the upper retracted surface 72.

In the deployed configuration, an upper region of the damping pad 78 protrude upper receiving surface 72 to contact the lower surface 42 of the wind turbine platform 14. This allows a safer and softer contact of the wind turbine platform 14 and the upper receiving surface 72.

Also in the deployed configuration, a lower region of the damping pad 78 remains lodged in the housing 82 to maintain the horizontal position of the damping pad 78 and prevent it from getting wedged at full contact between the lower surface 42 and the upper receiving surface 72.

Advantageously, the damping system 73 comprises at least a sensor able to measure the actual height of the damping pad 78 between the retracted configuration and the protruding configuration.

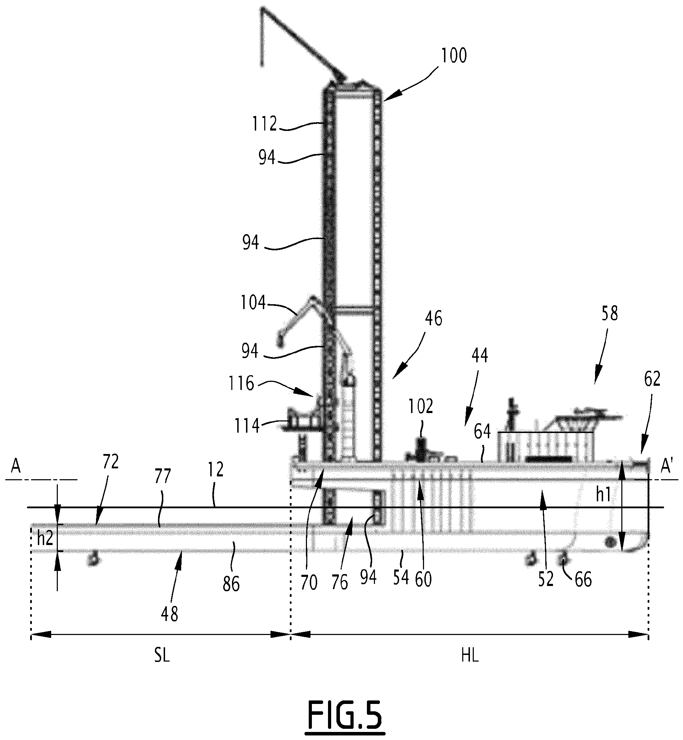

In reference to figure 2 and 5, the wind turbine intervention system 46 comprises a wind turbine equipment lifting tower 100. It advantageously comprises a wind turbine equipment storage 102 and at least a crane 104 to transport wind turbine equipment between the wind turbine equipment storage 102 and the wind turbine equipment lifting tower 100.

In this example, the lifting tower 100 comprises at least one mast 112, an elevator 114, mounted mobile along the mast 112, and a lifting actuator 116 to move the elevator 114 between a lower unloading/loading position and at least an upper intervention position.

The elevator 114 is configured to receive a wind turbine equipment, for example a blade 40 to move it between a lower position at the upper deck surface 64 to a upper position at the nacelle 34 height.

In the example of figures 2 to 8, the lifting tower 100 comprises a plurality of tower modules 94 assembled end to end from the upper deck surface 64.

The height of the lifting tower 100 is adjustable depending on the number of assembled modules 94 above the upper deck surface 64.

Unassembled modules 94 are advantageously stored in the storage region 76 of the upper receiving surface 72, below the tower supporting region 70.

Preferably, the intervention vessel 10 comprises a tower jack and lifting system (not shown) configured to release the lifting tower 100 from the upper receiving surface 72, and configured to move it vertically and to lock it in position.

The intervention vessel 10 preferably comprises a free module moving system (not shown) configured to move an additional unassembled module 94 below the lifting tower in the region 76, such that the tower jack and lifting system can lower the lifting tower 100 in contact with the unassembled additional module 94 to assemble the additional module 94 at the bottom of the lifting tower 100.

The ability to increase and decrease the height of the lifting tower 100 makes the lifting tower 100 adaptable to different sizes of wind turbine platform. The tower height can also be decreased during transit of the intervention vessel 10 to the vicinity of the floating wind turbine platform 14, to improve the intervention vessel 10 stability and maneuverability. It also makes it easier to adapt the lifting tower 100 to other functions / tasks.

The wind equipment storage 102 is either permanent or removable. It advantageously comprises systems to move / skid blades 40 in all directions.

It may also comprise structures to carry out repairs on the blades 40, e.g. applying glue in cracks, gluing new segments, sanding, painting etc. It may also comprise a washing station with waste water collection.

The ballast receiving volume 52 is located within the main hull 44 and/or within the side hulls 86.

At rest, the ballast receiving volume 52 is filled at least partially with a gas such as air.

The ballast is here formed with water from the body of water 12. The ballast controller 50 comprises at least a pump configured to pump ballast in and/or out of the ballast receiving volume to adjust the amount of ballast received in the ballast receiving volume 52.

Thus, the ballast controller 50 is configured to control the draft of the intervention vessel 10 between a lower position, in which the upper receiving surface 72 of the stern 48 is configured to pass under the lower surface 42 of the wind turbine platform 14 and an immobilizing position, in which the upper receiving surface 72 of the stern 48 is applied under the lower surface 42 of the wind turbine platform 14.

In the immobilizing position, the upper surface receiving surface 72 advantageously exerts an upper force on the lower surface 42 to at least partially lift the wind turbine platform 14, while keeping both the upper receiving surface 72 and the lower surface 42 underwater.

An intervention method on a wind turbine platform 14 using the intervention vessel 10 according to the invention will now be described.

Initially, as shown in figure 5, the offshore floating intervention vessel 10 approaches the offshore floating wind turbine platform 14 using the propulsion system 66. The longitudinal axis A-A' of the stern 48 is then oriented to pass under the lower surface 42 of the wind turbine platform 14 between the anchoring lines 30 of the anchoring assembly 17. The upper receiving surface 72 of the stern 48 is underwater while the upper deck 62 is above the surface of the body of water 12.

Then, the actuators 80 are activated to deploy the receiving damping pads 78 in their protruding configuration.

As shown in figure 6, the stern 48 is then moved underneath the wind turbine platform 14, using the propulsion system 66, in order to place the upper receiving surface 72 of the stern 48 below the lower surface 42 of the wind turbine platform 14.

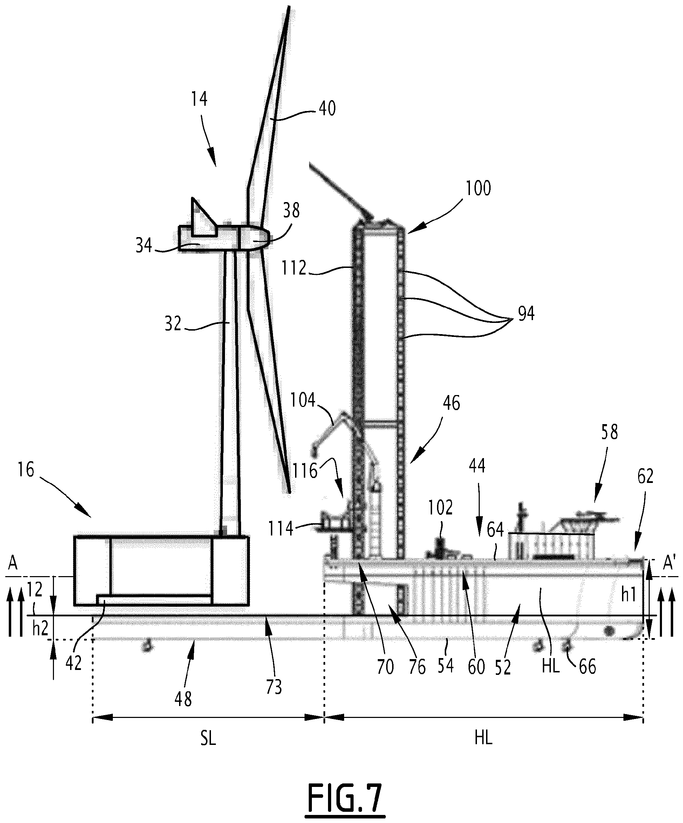

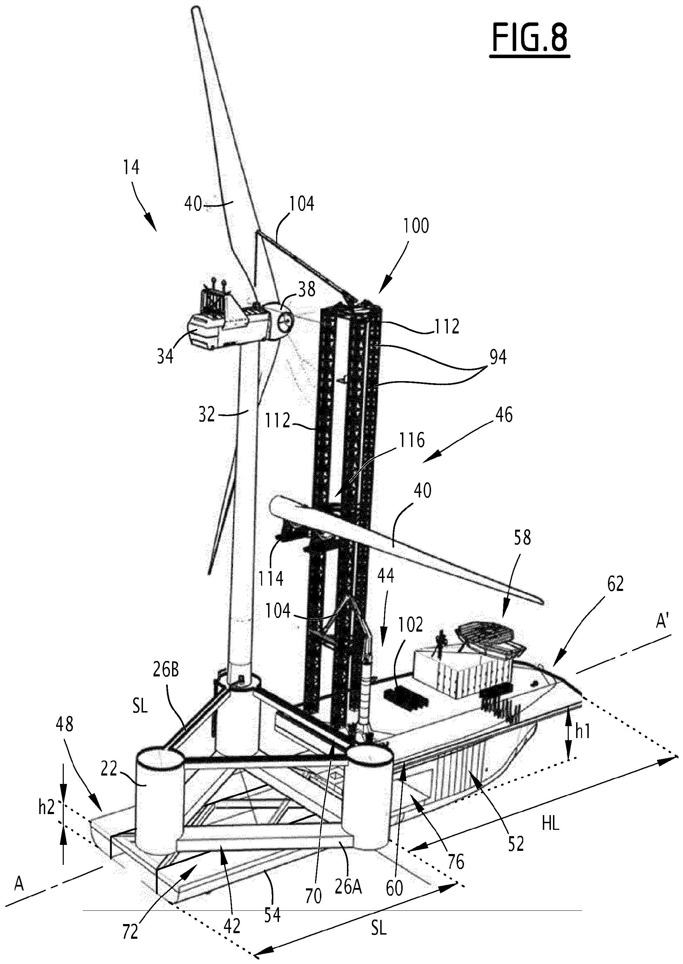

When the upper receiving surface 72 is positioned underneath the lower surface 42, the ballast controller 50 removes ballast from the ballast receiving volume 52, as shown in figure 7. This decreases the draft of the intervention vessel 10 and lifts the upper receiving surface 72 in contact with the lower surface 42 to exert an upwardly directed force on the lower surface 42 as shown in figure 8.

The receiving damping pad 78 ensure a smooth contact between the upper receiving surface 72 and the lower surface 42. The receiving damping pad 78 are pushed towards their retracted configurations.

When the wind turbine platform 14 is received and lifted by the upper receiving surface 72 of the stern 48, the height of the equipment lifting tower 46 is potentially adjusted by adding or removing tower modules 94.

As described above, adding a tower module 94 comprises releasing the lifting tower 100 from the upper receiving surface 72, and locking it in position via the tower jack and lifting system. A free unassembled module 94 is positioned below the lifting tower 100 in the region 76 below the lifting tower 100. The tower jack and lifting system then lowers the lifting tower 100 in contact with the unassembled additional module 94 and the additional module 94 is assembled at the bottom of the lifting tower 100.

Subsequently, the lifting tower 100, including the additional module 94 is lifted again to either add another module 94 or to lock it back to the upper receiving surface 72.

An intervention is then carried out. The intervention for example comprises removing a wind turbine equipment, such as a blade 40, from the wind turbine 20 using the elevator 114 or a crane of the wind turbine equipment lifting tower 100. In addition or in variant, the intervention comprises mounting a wind turbine equipment on the wind turbine 20 using the elevator 114 or a crane of the wind turbine equipment lifting tower 100.

Once the intervention is completed, the intervention vessel 10 is then ballasted again by filling with water the ballast receiving volume 52 with the ballast controller 50. The upper receiving surface of the stern 48 lowers, disengaging from the wind turbine platform 14.

The intervention vessel 10 is then moved away from the wind turbine platform 14 using the propulsion system 16.

The intervention platform 10 according to the invention is hence configured to carry out self-propelled and low-emission operations including installation and maintenance in a wind park in deeper waters having floating wind turbine platforms 16. The reception and lifting of the wind turbine platform 14 on the upper receiving surface 72 of the stern 48 minimizes relative movements between the intervention vessel 10 and the wind turbine platform 14.

Establishing a full contact surface and load transfer between the upper receiving surface 72 of the stern 48 and the wind turbine platform 14 makes the wind turbine platform 14 and the intervention vessel 10 behave as one unit and a coincident movement pattern is obtained. The relative movement between the nacelle 34 and the lifting tower 100 becomes approximately equal, which considerably simplifies the lifting operations and significantly increases the potentially operable maintenance windows. This provides safer maintenance operations and reduces levelized costs of energy.

In a variant, the intervention vessel 10 has equipment for launching remote-controlled submarines (ROVs), remote-controlled flying vehicles (drones), etc...

In a variant, the intervention vessel 10 has a mobile ballast system on board, to be mounted on a wind turbine platform 14 without a ballasting system, to adjust draft and optimize the reception of the wind turbine platform 14 on the upper receiving surface 72.

## Claims

1. An offshore floating intervention vessel (10), intended to temporarily support an offshore wind turbine platform (14) in a body of water (12) to carry out an installation and/or maintenance intervention on a wind turbine (20), the intervention vessel (10) comprising:
- an elongated floating main hull (44) defining a longitudinal axis (A-A'), the main hull (44) having an upper deck (62) defining un upper deck surface (64) at a first height (h1), the main hull (44) having a hull length (HL),
- a stern (48) longitudinally protruding from the main hull (44) to a free end of the offshore floating intervention vessel (10), the stern (48) defining an upper receiving surface (72) to receive an offshore wind turbine platform (14), the upper receiving surface (72) extending in a plane at a second height (h2) lower than the first height (h1) between the floating hull (44) and the free end of the stern (48),
the upper receiving surface (72) being configured to engage a lower surface (42) of an offshore wind turbine platform (14), the offshore floating intervention vessel (10) having at least a ballast receiving volume (52), the offshore floating intervention vessel (10) having a ballast controller (50) configured to control a quantity of ballast received in the ballast receiving volume (52) to lift the upper receiving surface (72) of the stern (48) in contact with the lower surface (42) of the offshore wind turbine platform (14),
- a wind turbine equipment lifting tower (100), configured to lift at least an equipment of the wind turbine (20), the wind turbine equipment lifting tower (100) protruding from the upper deck surface (64)
**characterized in that** the volume (84) above the upper receiving surface (72) is free to receive an offshore wind turbine platform (14) on the upper receiving surface (72), at the free end and over at least 50% of the length (SL) of the stern (48) taken along the longitudinal axis (A-A') from the free end,
the second height (h2) being at most equal to 40% of the first height (h1).

2. The offshore floating intervention vessel (10) according to claim 1, wherein the length (SL) of a wind turbine platform receiving region (77) of the upper receiving surface (72), taken along the longitudinal axis between an end of the upper deck (62) adjacent to the stern (48) and the free end is greater than 30% of the hull length (HL) and is advantageously comprised between 30% and 70% of the hull length (HL), preferably between 40% and 60% of the hull length (HL).

3. The offshore floating intervention vessel (10) according to any one of the preceding claims, wherein the stern (48) is a catamaran stern (74) having at least two side hulls (86) and preferably trusses (88) connecting the two side hulls (86), the upper receiving surface (72) being defined on the two side hulls (86).

4. The offshore floating intervention vessel (10) according to any one of the preceding claims, wherein the stern (48) comprises at least a receiving damping pad (78) configured to partially protrude above the upper receiving surface (72) to contact a lower surface (42) of the offshore wind turbine platform (14), the or each damping pad (78) being retractable in a housing (82) provided in the stern (48) from a protruding configuration to a retracted configuration.

5. The offshore floating intervention vessel (10) according to claim 4, wherein the or each damping pad (78) is buoyant and is biased towards the protruding configuration, the stern (48) comprising an actuator (80) to control the configuration of the damping pad (78) between the protruding configuration and the retracted configuration.

6. The offshore floating intervention vessel (10) according to any one of the preceding claims, wherein the hull (44) comprises a fore ship (58) defining a free end of the main hull (44) and a mid ship (60) from which the stern (48) protrudes, the mid ship (60) having a tower supporting region (70) adjacent to the stern (48), the wind turbine equipment lifting tower (100) protruding from the tower supporting region (70).

7. The offshore floating intervention vessel (10) according to claim 6, wherein the tower supporting region (70) protrudes above and apart from a storage region (76) of the stern (48) connected to the hull (44), the tower supporting region (70) and the storage region (76) defining a storage space (90), the tower supporting region (70) being optionally cantilevered above the storage region (76).

8. The offshore floating intervention vessel (10) according to claim 7, wherein the wind turbine equipment lifting tower (100) comprises a plurality of tower modules (94) assembled end to end, at least one tower module (94) being configured to be disassembled and stored in the storage space (90).

9. The offshore floating intervention vessel (10) according to any one of claims 6 to 8, wherein the fore ship (58) comprises a propulsion system (66) configured to move the offshore floating intervention vessel (10) in the body of water (12).

10. An assembly comprising an offshore wind turbine platform (14) and an offshore floating intervention vessel (10) according to any one of the preceding claims supporting the offshore wind turbine platform (14), the upper receiving surface (72) of the stern (48) being engaged on a lower surface (42) of the offshore wind turbine platform (14), and wherein, preferentially, the upper receiving surface (72) of the stern (48) is totally immersed in the body of water (12), the offshore wind turbine platform (14) being partially immersed in the body of water (12).

11. The assembly according to claim 10, wherein, in projection along the longitudinal axis (A-A'), a longitudinal dimension of the offshore wind turbine platform (14) is contained in a longitudinal dimension of the upper receiving surface (72).

12. The assembly according to claim 10 or 11, wherein the floating offshore wind turbine platform (14) comprises a floating foundation (16) having at least three floating columns (22), and lower pontoons (26A) connecting the at least three floating columns (22), the lower pontoons (26A) defining at least part of the lower surface (42) of the floating offshore wind turbine platform (14), the upper receiving surface (72) of the stern (48) being engaged under each of the three pontoons.

13. An intervention method on an offshore wind turbine platform (14) comprising the following steps:
(i) transporting an offshore floating intervention vessel (10) according to any one of claims 1 to 9 in the vicinity of an offshore wind turbine platform (14) floating in a body of water (12);
(ii) placing the upper receiving surface (72) of the stern (48) below a lower surface (42) of the offshore wind turbine platform (14);
(iii) removing ballast from the ballast receiving volume (52) of the offshore floating intervention vessel (10) to lift the upper receiving surface (72) of the stern (48) in contact with the lower surface (42) of the offshore wind turbine platform (14) to immobilize the offshore wind turbine platform (14) on the upper receiving surface (72) of the stern (48);
(iv) carrying out an intervention on a wind turbine (20) of the offshore wind turbine platform (14);
(v) ballasting the stern (48) by introducing ballast in the ballast receiving volume (52) to disengage the upper surface from the lower surface (42);
(vi) transporting the offshore floating intervention vessel (10) away from the offshore wind turbine platform (14),
wherein, during steps (i) to (vi), the upper receiving surface (72) of the stern (48) is totally immersed in the body of water (12), the offshore wind turbine platform (14) remaining partially immersed in the body of water (12).

14. The intervention method according to claim 13, wherein carrying out the intervention comprises removing a wind turbine equipment, in particular a blade (40) from the wind turbine (20) using the wind turbine equipment lifting tower (100) or/and mounting a wind turbine equipment on the wind turbine (20) using the wind turbine equipment lifting tower (100).

15. The intervention method according to claim 13 or 14, wherein the wind turbine equipment lifting tower (100) comprises a plurality of tower modules (94) configured to be assembled end to end, at least one tower module (94) being configured to be disassembled and stored in the storage space (90), the method comprising during step (i), maintaining the at least one tower module (94) disassembled, and between step (iii) and step (iv), assembling the at least one disassembled tower module (94) to another tower module (94) to increase the height of the wind turbine equipment lifting tower (100).
